# EUROPÄISCHE PATENTANMELDUNG

(11) **EP 4 549 385 A1**
(43) Veröffentlichungstag der Anmeldung: **07.05.2025**
(21) Anmeldenummer: 23207360.1
(22) Anmeldetag: 02.11.2023
(51) Int. Cl.: C01C 1/04

(54) **VERFAHREN ZUR AMMONIAKSYNTHESE MITTELS EINER REAKTIONSVORRICHTUNG UND ZUGEHÖRIGE REAKTIONSVORRICHTUNG**

(71) Anmelder: Siemens Aktiengesellschaft, 80333 München (DE)
(72) Erfinder: Kiener, Christoph, 81369 München (DE)
(74) Vertreter: Siemens Patent Attorneys

(57) **Zusammenfassung**

Die Erfindung betrifft ein Verfahren zur Ammoniaksynthese mit einer Reaktionsvorrichtung (10) in deren Reaktoreinrichtung (12) Speisegas (14), welches zumindest Stickstoff und Wasserstoff als Edukte umfasst, über eine Einlassöffnung unter Druck über einen Katalysator (60) geleitet wird, wobei Ammoniak als Produkt gebildet wird.

## Beschreibung

Die Erfindung betrifft ein Verfahren zur Ammoniaksynthese mittels einer Reaktionsvorrichtung gemäß dem Patentanspruch 1. Ferner betrifft die Erfindung eine korrespondierende Reaktionsvorrichtung gemäß dem Patentanspruch 6.

Ammoniak, welches die chemische Formel NH₃ aufweist, ist eine besonders wichtige Grundchemikalie und wurde beispielsweise im Jahr 2020 in der Größenordnung von 140 Millionen Tonnen hergestellt. Ausgangsstoffe für das vor rund 120 Jahren erfundene Haber-Bosch-Verfahren, welches das Standardverfahren zur Ammoniaksynthese darstellt, sind Wasserstoff (H₂) und Stickstoff (N₂).

Ammoniak entsteht dabei in einer Gleichgewichtsreaktion aus den Elementen Wasserstoff und Stickstoff gemäß der Gleichung:

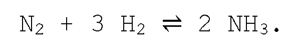

In der Regel wird der benötigte Stickstoff der Umgebungsluft entnommen, wobei der in der Luft enthaltene Sauerstoff beispielsweise abgeschieden und der Stickstoff durch Luftzerlegungsverfahren aufgereinigt wird. Der Wasserstoff wird als energiehaltiger Ausgangsstoff der Ammoniaksynthese bereits seit hundert Jahren fast ausschließlich durch fossile Energieträger bereitgestellt.

Folgeprodukte, bei denen Ammoniak als Ausgangsstoff dient, sind beispielsweise Harnstoff, Ammonium- und Nitrat-Düngemittel, wobei über 80 % der Weltproduktion von Ammoniak für Düngemittel verwendet werden. Ferner sind vielfältigste chemische Produkte, beispielsweise Polyamide für Textilfasern, Kunststoffe und Werkstoffe, Duroplast-Melaminharze, Sprengstoffe, Reduktionsmittel in der Rauchgasentstickung und so weiter auf Ammoniakbasis erzeugt. Des Weiteren wird NH₃ als Wasserstoffspeichersubstanz und auch als Energieträger diskutiert.

Für die Ammoniaksynthese werden derzeit fast 2 % aller fossilen Energieträger verbraucht. Ebenso entstammen aus der Ammoniakherstellung etwa 500 Millionen Tonnen CO₂, was ca. 2 % der anthropogenen CO₂-Emission aus Energieträgern entspricht, was für ein einziges Produktmolekül durchaus bemerkenswert viel ist.

Wünschenswert wäre, grünen Ammoniak ohne Treibhausgasemission herzustellen, was bereits ein wichtig diskutiertes Thema der chemischen Industrie darstellt, das aufgrund komplexer Anlagen und Betriebskonzepte und ohne bereitstehenden CO₂-neutralen, sogenannten grünen, Elektrolysewasserstoff bisher nicht in der Breite realisiert wurde. Klimaneutrales Ammoniak wird sogar als Wasserstoff-Überträgersubstanz zwischen Australien und Europa als Kraftstoff für Containerschiffe diskutiert, wodurch eine erhebliche CO₂-Reduktion in der Schifffahrt erreicht werden könnte.

Eine innovative, vollautomatisierte und fluktuierend betriebene sogenannte grüne Ammoniakanlage (Green-Ammonia) mit Wasserelektrolyse im dezentralen Elektrizitätsnetz könnte als Energiespeicher oder auch in Verbindung mit entsprechender nachhaltiger Düngemittelsynthese eine attraktive Möglichkeit für eine dezentrale, CO₂-freie Ammoniaksynthese sein.

Wirtschaftliche, technologische und betriebstechnische Gründe gegen die Verwendung von Wasserstoff aus erneuerbaren Energien in der Ammoniaksynthese sind derzeit:
Die Dezentralität: da kleine Anlagen in der Regel eine besonders geringe Menge an Endprodukten im Vergleich zu Fertigungskosten bedeuten; die Fluktuation: da Wasserstoff aus erneuerbaren Energien in der Regel nur unstet zur Verfügung steht und ohne Speicherung kein kontinuierlicher Betrieb der Ammoniaksynthese möglich ist; die Automatisierung: kleine unkonventionelle Anlagen sind in der Regel nicht vollautomatisch und dadurch im Betrieb aufgrund von Personalkosten zu teuer; die Effizienz: Ammoniaksynthese ist begünstigt von hohem Druck, der kostengünstig bereitgestellt werden muss. Darüber hinaus sind großtechnische Prozesse im kleinen Maßstab stets kompliziert.

Aufgabe der vorliegenden Erfindung ist es, ein Verfahren sowie eine Reaktionsvorrichtung zur Ammoniaksynthese bereitzustellen, welche besonders gut, insbesondere hinsichtlich kleiner Anlagen, skalierbar ist und darüber hinaus besonders effizient ist.

Diese Aufgabe wird erfindungsgemäß durch die Gegenstände der unabhängigen Patentansprüche gelöst. Vorteilhafte Ausgestaltungen und Weiterbildungen sind in den übrigen Ansprüchen, der Beschreibung sowie in den Figuren gezeigt.

Ein erster Aspekt der Erfindung betrifft ein Verfahren zur Ammoniaksynthese mittels einer Reaktionsvorrichtung.

Bei dem erfindungsgemäßen Verfahren wird zur Abtrennung des NH₃-Produkts gasförmiges Fluid beziehungsweise Speisegas, welches zumindest N₂ und H₂ beziehungsweise Stickstoff und Wasserstoff als Edukte umfasst, über eine Einlassöffnung in eine Reaktoreinrichtung der Reaktionsvorrichtung unter Druck über einen Katalysator geleitet, wobei Ammoniak als Produkt gebildet wird und dieses gasförmig insbesondere mit weiteren Produkten als nasses Gas hin zu einer Kondensationseinrichtung, die zumindest drei monolithisch miteinander beziehungsweise insbesondere entlang einer Kondensationsrichtung nacheinander ausgebildete Wärmetauscheinheiten aufweist, geleitet wird, um diese zu durchströmen, wobei das Ammoniak NH₃ als Produkt aus dem eingeleiteten, insbesondere nassen Gas als Kondensat kondensiert wird. Dazu wird die erste Wärmetauscheinheit als Gegenstromkühler beziehungsweise im Englischen Feed-Effluent-Exchanger betrieben, wodurch das Speisegas mit trockenem Gas beziehungsweise Restgas, aus welchem bereits Ammoniak auskondensiert ist, Wärme tauscht, und die zweite Wärmetauscheinheit, welche insbesondere nahtlos an die erste Wärmetauscheinheit grenzt beziehungsweise diese funktional verlängert, als Kondensor betrieben wird, wodurch die gasförmigen Edukte vom flüssigen unter Druck stehenden Kondensat beziehungsweise Produkt getrennt werden, und die dritte Wärmetauscheinheit als Nachkühler betrieben wird und dadurch das unter Druck stehende Kondensat unterkühlt wird, welches, insbesondere bei Raumtemperatur, über einen Sammelkanal abgeführt wird und ferner das trockene Gas beziehungsweise Restgas über eine Auslassöffnung aus der Reaktionsvorrichtung abgeführt wird.

Die monolithische Kondensationseinrichtung kann insbesondere mittels additiver Fertigung ausgebildet beziehungsweise gefertigt oder hergestellt sein. Aufgrund der kompakten und somit zusammenliegenden unterschiedlichen funktionalen Einheiten - den Wärmetauscheinheiten - ergibt sich eine besondere Strukturfestigkeit und aufgrund der Geometrie eine gewünschte Leitfähigkeit beziehungsweise Wärmeintegration insbesondere bei einer exergetischer Optimierung, sodass beispielsweise ein geringer Abfluss von Abwärme ins Kühlwasser ermöglicht werden kann.

So sind mit anderen Worten insbesondere mehrere Wärmetauscher und ein Phasenabscheider, welcher insbesondere im Übergangsbereich der zweiten und dritten Wärmetauscheinheit durch diese ausgebildet ist, aus einem insbesondere mittels additiver Fertigung und/oder zumindest einen teilweise metallischen Werkstoff aufweisenden Block gebildet. Die Ammoniaksynthese mittels des erfindungsgemäßen Verfahrens ist eine Gleichgewichtsreaktion, wobei sich das chemische Gleichgewicht insbesondere bei hohem Druck in einen attraktiven Bereich verschiebt. So kann beispielsweise selbst bei 400 °C eine hohe Reaktionsgeschwindigkeit und zugleich durch 500 bar (50 MPa) Druck eine akzeptable Gleichgewichtslage erzielt werden, wodurch besonders wenig Katalysator verwendet werden kann.

Dabei können Umsätze von beispielsweise 60 % erreicht werden, was gegenüber konventionellen Prozessverfahren, welche üblicherweise bei 200 bar und 330 °C stattfinden, eine viel höhere Reaktionsrate und Produktausbeute aufgrund des chemischen Gleichgewichts ermöglicht. So ist ein Vorteil des Verfahrens eine besonders hohe Effizienz bei der Ammoniaksynthese.

Um die Synthese besonders vorteilhaft durchzuführen, ist in einer Ausgestaltung der Erfindung vorgesehen, dass die Reaktoreinrichtung einen insbesondere monolithisch mit der Kondensationseinrichtung ausgebildeten Reaktionsraum aufweist, welcher durch eine Vorwärmeeinheit und einen zweiten Reaktor umgeben von einem Heatpipe-Wärmeaustauschreservoir sowie durch einen ersten Reaktor umgeben von einem Heatpipe-Wärmegewinnungsreservoir , welches beispielsweise mit Naphthalin bis ca. 430 °C betrieben wird, ausgebildet ist, durch welchen das gasförmige Fluid beziehungsweise Speisegas vorgewärmt und zur Reaktion gebracht wird. Mit anderen Worten ist eine erste Reaktionszone vorgesehen, welche sich vorteilhaft durch Röhren in einem Wärmebad gebildet ist. So kann Hochtemperaturwärme beispielsweise in ein Nutzwärmesystem, das zum Vorheizen des nassen Gases beziehungsweise Feedgases genutzt wird, abgegeben werden. Dadurch ergibt sich der Vorteil, dass dies besonders exergetisch günstig ist, so kann beispielsweise zunächst das geringe Temperaturniveau von beispielsweise 350 °C genutzt werden, um mit Reaktionswärme weiter aufzuheizen und beispielsweise über die Heatpipes bei höheren Temperaturen als die Nutzwärme auszukoppeln.

In weiterer vorteilhafter Ausgestaltung der Erfindung ist der Reaktionsraum durch einen Druckbehälter gebildet beziehungsweise von einem Druckbehälter umschlossen und somit von diesem begrenzt, sodass das gasförmige Fluid beziehungsweise Speisegas mit wenigstens 300 und insbesondere 400 bar und besonders bevorzugt 500 bar in den Reaktionsraum eingeleitet wird beziehungsweise werden kann. Mit anderen Worten ist die Reaktionsvorrichtung so ausgelegt, dass die Reaktion beziehungsweise das Kondensieren unter einem besonders hohen Druck, welcher über 300 bar liegt und vorteilhafterweise 500 bar ist, durchgeführt werden kann. Dadurch ergibt sich der Vorteil, dass eine besonders hohe Reaktionsausbeute ermöglicht wird.

In weiterer vorteilhafter Ausgestaltung der Erfindung wird der Druck des Speisegases mittels eines ionischen Verdichters beziehungsweise eines Verdichters mit ionischer Flüssigkeit erzeugt. Mit anderen Worten wird ein isotherm arbeitender Verdrängungsprozessor, welcher durch eine ionische Flüssigkeit bei der Verdichtung entstehende Wärme im Inneren abführen kann, verwendet, um das trockene Gas beziehungsweise Feedgas zu verdichten. Dabei ergibt sich der Vorteil, dass auf besonders vorteilhafte Weise das Gas mit besonders hohen Drücken und dabei besonders effizient komprimiert werden kann.

In weiterer Ausgestaltung der Erfindung können mehrere Reaktionsläufe in einer Kaskade hintereinander durchgeführt werden beziehungsweise erfolgen, wobei dazu insbesondere eine korrespondierende Anzahl an Reaktionsvorrichtungen, insbesondere monolithisch gefertigt, in Reihe geschaltet sind. Dabei umfasst vorteilhafterweise die jeweilige Reaktoreinrichtung der jeweiligen Reaktionsvorrichtung ein jeweiliges Wärmeaustauschreservoir mit Vorwärmeeinheit und zweitem Reaktor beziehungsweise ist mit diesen zusammen ausgebildet. Mit anderen Worten kann die Reaktionsvorrichtung mehrere Reaktoreinrichtungen und Kondensationseinrichtungen aufweisen, welche fluidisch leitend in Reihe geschaltet sind, sodass aus einer in Strömungsrichtung des Fluids zuerst angeordneten Kondensationseinrichtung ausströmendes trockenes Gas als quasi Speisegas beziehungsweise Feedgas in die nächste Reaktoreinrichtung strömt. So kann beispielsweise über eine Zwischenkondensation eine besonders hohe Ausbeute ermöglicht werden, weil jeweils Ammoniak dem Gleichgewicht entzogen werden kann. Durch die Kaskade kann das Produkt beziehungsweise Ammoniak jeweils bei jedem Durchlauf auskondensieren, wobei insbesondere nur nicht verzichtbaren Wärmeverluste, insbesondere bei einer axialen Wärmeleitung (in der jeweiligen Kondensationseinrichtung) die bei der Kondensation unter Kühlung freiwerdende Wärme ins Kühlwasser abfließt. Die Wärme im insbesondere heißen Produktstrom des Speisegases wird zum Aufheizen des aus dem Kondensator kommenden Restgases benutzt. Nutzwärme kann bei 400 °C aus dem Wärmegewinnungsreservoir des ersten Reaktors ausgekoppelt werden. Dadurch ergibt sich der Vorteil, dass eine besonders hohe Ammoniakausbeute erzielt werden kann.

Ein zweiter Aspekt der Erfindung betrifft eine Reaktionsvorrichtung für ein Verfahren gemäß dem ersten Aspekt der Erfindung. Die erfindungsgemäße Reaktionsvorrichtung umfasst eine Reaktoreinrichtung, welche insbesondere eine Vorwärmeeinheit, einen ersten Reaktor und einen zweiten Reaktor aufweist, sowie eine Kondensatoreinrichtung, welche wenigstens drei monolithisch miteinander beziehungsweise nacheinander ausgebildete Wärmetauscheinheiten aufweist, welche insbesondere funktional ineinander übergehen, wobei von den Wärmetauscheinheiten die erste Wärmetauscheinheit als Gegenstromkühler beziehungsweise Feed-Effluent-Tauscher, die zweite Wärmetauscheinheit als Kondensor und die dritte Wärmetauscheinheit als Nachkühler ausgebildet sind, wobei insbesondere die zweite und teilweise die dritte Wärmetauscheinheit zusammen einen Phasenabscheider bilden, welcher dazu dient, das Kondensat des Ammoniaks aus dem Gas abzuscheiden.

Dabei sind Vorteile, vorteilhafte Ausgestaltungen und Weiterbildungen des ersten Aspekts der Erfindung als Vorteile, vorteilhafte Ausgestaltungen und Weiterbildungen des zweiten Aspekts der Erfindung anzusehen und umgekehrt.

In vorteilhafter Ausgestaltung der Erfindung ist die erste Wärmetauscheinheit, welche insbesondere als Gegenstromkühler ausgebildet ist, durch mehrere zu einander parallel beabstandet angeordnete massive Platten ausgebildet, wobei jeweils zwei benachbarte Platten jeweils einen, insbesondere entlang einer Kondensationsrichtung orientierten Plattenkanal ausbilden. Dabei sind benachbarte Plattenkanäle insbesondere wechselseitig geöffnet. Zusätzlich ist die zweite Wärmetauscheinheit durch poröse Demistorplatten ausgebildet, welche jeweils die Platten der ersten Wärmetauscheinheit nahtlos fortführen beziehungsweise in diese übergehen, jedoch beispielsweise einen Umfang oder dergleichen ändern können. Zusätzlich ist die dritte Wärmetauscheinheit, welche insbesondere als Kondensatkühler ausgebildet ist, aus sich abwechselnden aneinanderlegen vollen Platten und porösen Sammelplatten ausgebildet, welche im Wesentlichen senkrecht zu den Platten der ersten und zweiten Wärmetauscheinheit angeordnet sind und wenigstens einen Kühlkanal beziehungsweise wenigstens zwei Kühlkanäle zum Durchströmen von insbesondere kaltem Kühlmittel, und in einem in eine Kondensationsrichtung liegenden Endbereich einen Sammelkanal für das Kondensat aufweisen.

Mit anderen Worten ist die Kondensationseinrichtung aus funktional zusammengeschalteten beziehungsweise ineinander übergehenden Wärmetauscheinheiten ausgebildet, sodass insbesondere der poröse Bereich der zweiten und dritten Wärmetauscheinheit, welche nahtlos ineinander übergehen, den Kondensator beziehungsweise Phasenabscheider bildet. Dabei ist je nach Wärmekapazität des verwendeten Werkstoffs, der insbesondere additiv gefertigten Kondensationseinrichtung, über die Kühlkanäle ein Temperaturgradient bis hin zur ersten Wärmetauscheinheit ausbildbar. Durch die abwechselnd geöffneten Platten ergibt sich die Möglichkeit der Gegenstromkühlung beziehungsweise des Feed-Effluent-Kühlers, sodass insbesondere an dem der zweiten und dritten Wärmetauscheinheit gegenüberliegenden Ende in jeweils einen der Plattenkanäle das Speisegas einströmt und durch eine poröse Demistorplatte in der Wärmetauscheinheit in den nächsten benachbarten Plattenkanal strömt und dort das trockene Gas wieder über den Plattenkanal zum oberen Ende der ersten Wärmetauscheinheit ausströmen kann. Dadurch ergibt sich der Vorteil, dass die Reaktionsvorrichtung für einen besonders effizienten Betrieb ausgebildet werden kann. Darüber hinaus ist ein besonders effizientes Durchführen des Verfahrens gemäß dem ersten Aspekt der Erfindung ermöglicht.

In weiterer vorteilhafter Ausgestaltung der Erfindung weist die Reaktionsvorrichtung mehrere, insbesondere monolithisch miteinander ausgebildete Reaktoreinrichtungen und Kondensationseinrichtungen auf. Zusätzlich oder darüber hinaus ist die jeweilige Kondensationseinrichtung beziehungsweise sind mehrere zusammengefasste beziehungsweise zusammengeflanschte Kondensationseinrichtungen und/oder Reaktoreirichtungen einstückig ausgebildet und/oder additiv gefertigt. Mit anderen Worten wird, um einen besonders geringen Wärmeverlust für das Verfahren zu ermöglichen, mehrere der Kondensationseinrichtungen und Reaktoreinrichtungen zusammengefasst, sodass quasi ohne extra Leitungen, wie beispielsweise Kanäle oder Rohre, ein kaskadiertes Durchführen mehrerer Durchläufe ermöglicht wird. Darüber hinaus kann die jeweilige Kondensationseinrichtung einstückig, das heißt insbesondere nahtlos aus einem Werkstück und dieses insbesondere mittels additiver Fertigung ausgebildet sein. Dadurch ergibt sich der Vorteil, dass beispielsweise ein besonders kostengünstiges Bereitstellen der Reaktionsvorrichtung ermöglicht wird. Darüber hinaus kann auf besonders sichere Weise die Funktionalität beispielsweise der Kondensationseinrichtung bereitgestellt werden.

In weiterer vorteilhafter Ausgestaltung der Erfindung ist ein Werkstoff der (jeweiligen) Reaktoreinrichtung und Kondensationseinrichtung gegenüber Hochdruck und/oder hohe Temperatur und/oder Ammoniak und/oder Wasserstoff und/oder Stickstoff langzeitstabil. Mit anderen Worten wird der Werkstoff, welcher beispielsweise insbesondere eine metallische Legierung ist, derart gewählt, dass die Kondensationseinrichtung und somit die Reaktionsvorrichtung für die Ammoniaksynthese möglichst langlebig ausgebildet werden können. Dadurch ergibt sich der Vorteil, dass beispielsweise ein Verschleiß besonders gering ist, wodurch die Reaktionsvorrichtung beziehungsweise das Verfahren besonders kostengünstig ausgebildet werden können.

In weiterer vorteilhafter Ausgestaltung der Erfindung umfasst der Werkstoff die Legierung mit der EN-Nummer 2.4856, DIN NiCr22Mo9Nb, auch als Inconel^{®} 625 oder IN625 bezeichnet, und/oder mit der EN-Nummer 2.4668, DIN NiCr19Fe19Nb5Mo3, auch als INCONEL^{®} 718 oder IN718 bezeichnet, und/oder weist der Werkstoff eine Wärmeleitfähigkeit von weniger als 15 und insbesondere 11 W/(m*K) auf, wodurch in der jeweiligen Kondensationseinrichtung entlang der Kondensationsrichtung (beziehungsweise axial) ein Temperaturgradient aufbaubar beziehungsweise ausbildbar ist. Aufgrund beispielsweise der jeweiligen Platten für die jeweiligen Plattenkanäle, welche dünn sind und eine gewisse Länge aufweisen, ist in Richtung des Temperaturgradienten daher ein sehr geringer Wärmeverlust möglich, wobei trotz der schlechten Wärmeleitfähigkeit radial immer noch ausreichend viel Wärme durch die dünnen Platten ausgetauscht werden kann. Mit anderen Worten ist der Werkstoff an einen gewünschten Temperaturgradienten angepasst. Dadurch ergibt sich der Vorteil, dass mit der vorgestellten Reaktionsvorrichtung das Verfahren besonders effizient durchgeführt werden kann.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Es zeigt:
- FIG 1: ein schematisches Ablaufdiagramm einer Ammoniaksynthese mit einer Reaktionsvorrichtung, welche eine Reaktoreinrichtung und eine Kondensationseinrichtung aufweist;
- FIG 2: eine schematische Perspektivansicht einer Kondensationseinrichtung der Reaktionsvorrichtung;
- FIG 3: eine schematische Schnittansicht eines Ausschnitts der Kondensationseinrichtung gemäß FIG 2;
- FIG 4: eine schematische Perspektivansicht einer Reaktoreinrichtung der Reaktionsvorrichtung;
- FIG 5: ein weiteres schematisches Ablaufdiagramm, welches ein Bereitstellen der Edukte für die Reaktionsvorrichtung beziehungsweise das Verfahren zeigt; und
- FIG 6: ein weiteres schematisches Ablaufdiagramm des Verfahrens, wobei mehrere Reaktionsdurchläufe kaskadiert hintereinander durchgeführt werden.

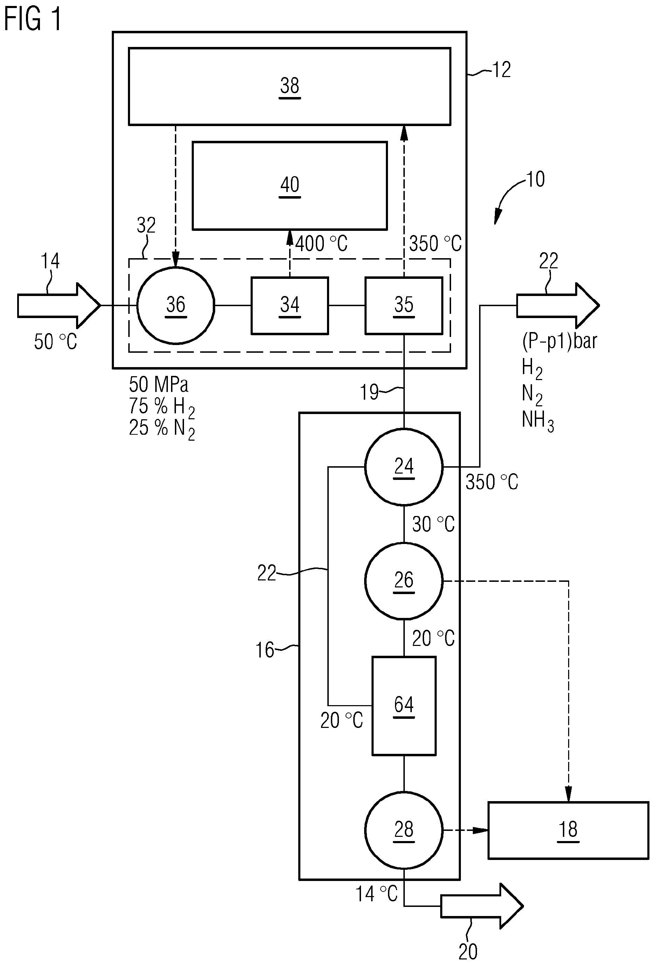

FIG 1 zeigt ein schematisches Ablaufdiagramm für ein Verfahren zur Ammoniaksynthese mittels einer Reaktionsvorrichtung 10, welche eine Reaktoreinrichtungen 12 und Kondensationseinrichtungen 16 umfasst.

Bei dem Verfahren wird in einen Reaktionsraum 32 der Reaktoreinrichtungen 12 Speisegas 14, welches zumindest Stickstoff und Wasserstoff als Edukte umfasst über eine Einlassöffnung unter Druck über beziehungsweise an einen Katalysator 66 geleitet wird, wobei Ammoniak als Produkt im chemischen Gleichgewicht gebildet wird. Das insbesondere gasförmige Ammoniak bildet zusammen mit den Resten des Speisegases 14 beziehungsweise mit gegebenenfalls weiteren daraus gebildeten Nebenprodukten ein nasses Gas 19. In der Regel entstehen jedoch keine Nebenprodukte. Dabei beschreibt der Ausdruck nasses Gas, dass in diesem wenigstens ein Produkt enthalten ist, welches man auskondensieren möchte.

Daher wird bei dem Verfahren das nasse Gas aus der Reaktoreinrichtung in eine Kondensationseinrichtung 16 geleitet, die zumindest drei monolithisch miteinander beziehungsweise nacheinander ausgebildete Wärmetauscheinheiten aufweist, und an der das Ammoniak als Produkt aus dem eingeleiteten Gas als Kondensat 20 kondensiert wird. Dabei wird die erste Wärmetauscheinheit 24 als Gegenstromkühler betrieben, wodurch das nasse Gas 19 mit trockenem Gas 22 beziehungsweise Restgas, aus welchem bereits Ammoniak kondensiert ist, Wärme tauscht. Die zweite Wärmetauscheinheit 26 wird als Kondensor betrieben, wodurch die gasförmigen Edukte beziehungsweise das gasförmige Fluid vom flüssigen unter Druck stehenden Kondensat 20 getrennt werden. Die dritte Wärmetauscheinheit 28 wird als Nachkühler betrieben und dadurch das unter Druck stehende Kondensat 20 unterkühlt beziehungsweise weiter abgekühlt wird, insbesondere auf Raumtemperatur. Diese dieses unterkühlte Kondensat 20 wird über einen Sammelkanal 30 und das trockene Gas 22 über eine Auslassöffnung abgeführt.

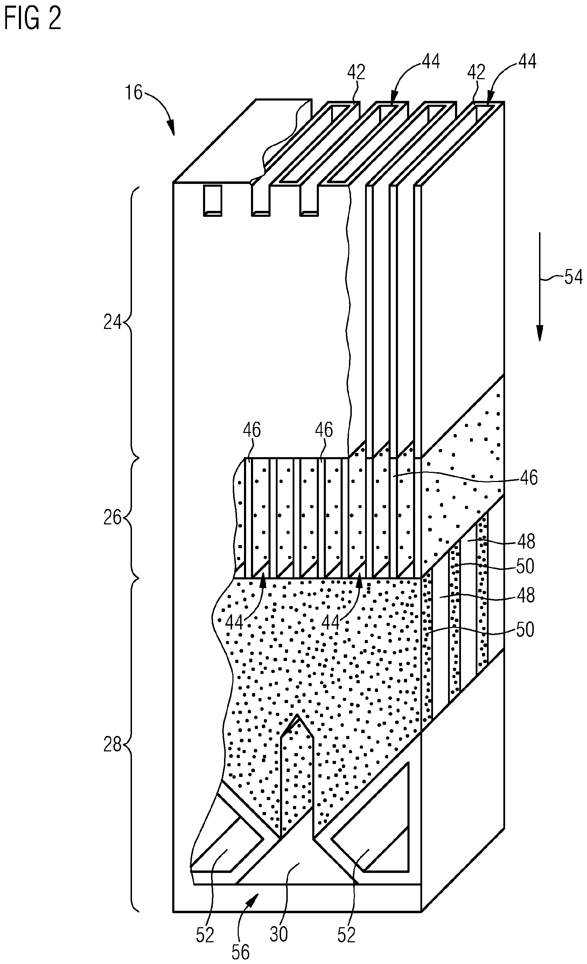

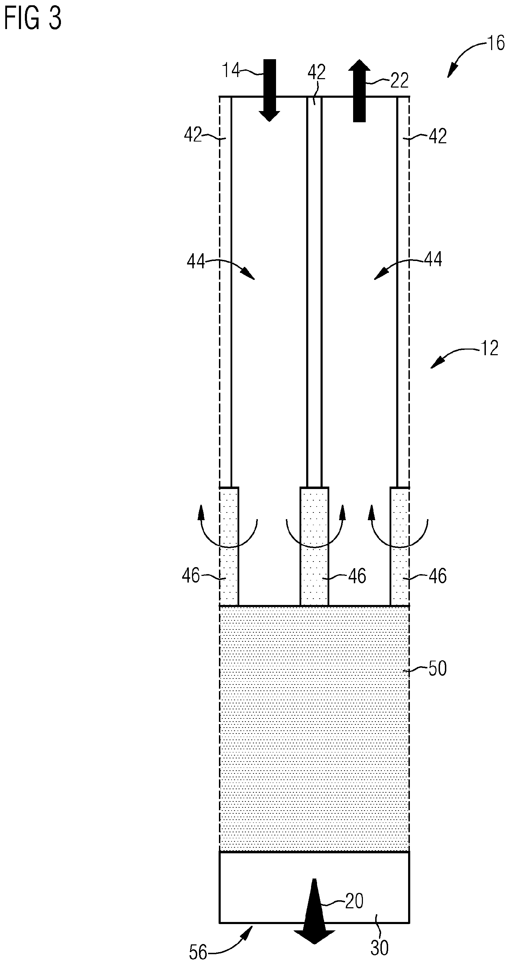

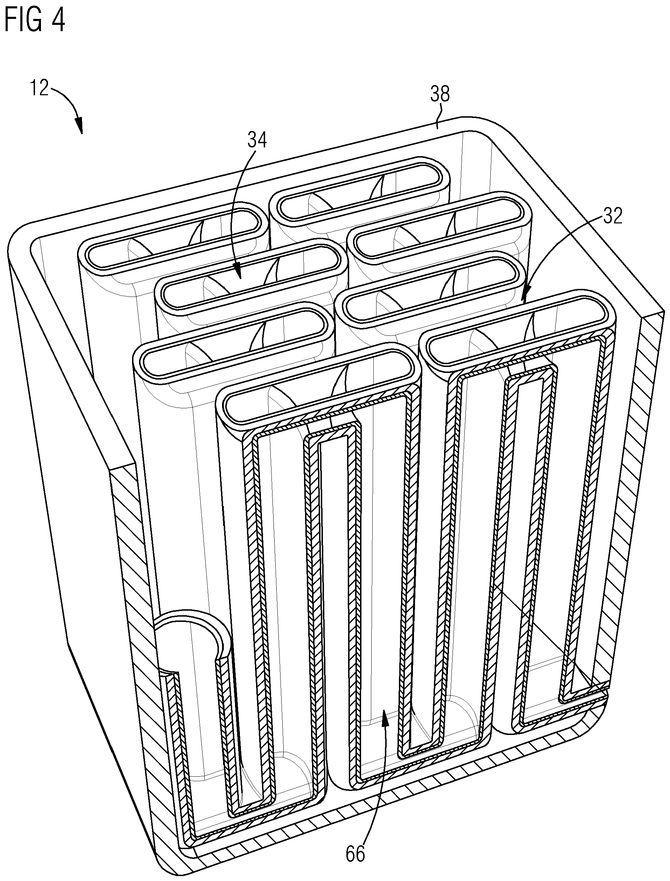

Vorteilhafterweise ist die Kondensationseinrichtung 16 (siehe FIG 2 und 3) insbesondere monolithisch mit der Reaktoreinrichtung 12 (siehe FIG 4) ausgebildet, welche eine Vorwärmeeinheit 36, welche insbesondere durch einen ersten Reaktor 34 umgeben von einer Heatpipe-Temperiereinheit gebildet wird. Dadurch kann das Speisegas 14 beziehungsweise Feedgas vorgewärmt werden.

Besonders vorteilhaft befindet sich in dem Reaktionsraum 32 die Vorwärmeeinheit 36 und ein zweiter Reaktor 35 umgeben von einem Wärmeaustauschreservoir 38, welches vorteilhaft als Heatpipe-Wärmeaustauschreservoir ausgebildet ist, sowie der ersten Reaktor 34 umgeben von einem Wärmegewinnungsreservoir 40, welches vorteilhaft als Heatpipe-Wärmegewinnungsreservoir ausgebildet ist. In dem Reaktionsraum 32 wird das Speisegas 14 vorgewärmt und zur Reaktion gebracht wird.

Vorteilhafterweise ist der Reaktionsraum 32 durch einen Druckbehälter begrenzt beziehungsweise von diesem gebildet, sodass das Speisegas 14 mit besonders hohem Druck, wenigstens 400 und insbesondere 500 bar, in den Reaktionsraum 32 eingeleitet werden kann.

Beispielsweise kann bei dem in FIG 1 gezeigten Verfahren das Speisegas 14, bevor es die Vorwärmeeinheit 36 erreicht, eine Temperatur von 50 °C aufweisen, wobei der Wasserstoffanteil 75 % und der Stickstoffanteil 25 % beträgt. Um das Gas vorteilhaft unter den gegebenen Drücken in den Druckbehälter beziehungsweise den Reaktionsraum 32 einleiten zu können, kann vorteilhafterweise ein ionischer Verdichter vorgesehen sein, welcher somit eine 500 bar Kompressionstechnologie, insbesondere für kleine Systeme, wie beispielsweise die Reaktionsvorrichtung 10, bereitstellen.

In der Vorwärmeeinheit 36 wird mittels eines Kühlmediums, wie beispielsweise Kühlwasser oder Naphthalin, welches in der Heatpipe-Temperiereinheit zyklisierend verdampft und kondensiert wird, die Temperatur des Speisegases 14 auf 400 °C beziehungsweise zumindest 350 °C erwärmt. Somit weist das nasse Gas 19 ebenfalls eine Temperatur von zumindest 350°C auf.

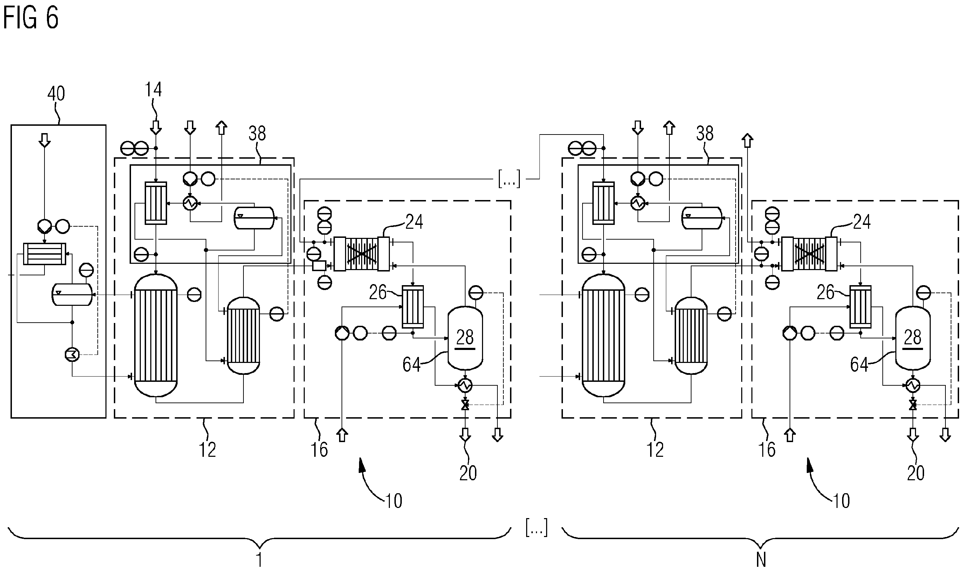

Mit dieser Temperatur und einem Druck von 50 MPa wird das nasse Gas 19 nun in die Kondensationseinrichtung 16 geleitet. Die dortige erste Wärmetauscheinheit 24 wird als Gegenstromkühler betrieben, sodass das nasses Gas 19 durch einen ersten Plattenkanal 44 hin zur zweiten Wärmetauscheinheit 26 zum Phasenabscheiden fließt und danach als trockenes Gas 14, in einem benachbarten Plattenkanal 44 zu dem der zweiten Wärmetauscheinheit 26 abgewandten Ende der ersten Wärmetauscheinheit 24 zurückfließt. Dort verlässt das trockene Gas 22 beispielsweise mit einer Temperatur von 350 °C die Kondensationseinrichtung 16, indem es beispielsweise über eine Entlüftungsöffnung abgeführt wird beziehungsweise in vorteilhafter Ausgestaltung direkt in eine weitere Reaktionsvorrichtung 10 beziehungsweise Reaktoreinrichtung 12 geführt wird, um beispielsweise mehrere kaskadierende Reaktordurchläufe beziehungsweise Reaktionsdurchläufe hintereinander zu ermöglichen. Dies wird in FIG 6 genauer betrachtet.

Die zweite Wärmetauscheinheit 26 dient als Kondensor, in welcher das Kondensat 20 aus dem Gas abgeschieden wird, wobei dies bei einer Temperatur von beispielsweise 30 °C geschieht und die zweite Wärmetauscheinheit 26 somit als Kühler und Phasenabscheider 64 verwendet werden kann beziehungsweise verwendet wird.

Eine Wärmesenke 18, das Wärmeaustauschreservoir 38 und das Wärmegewinnungsreservoir 40 symbolisieren in den Figuren die durch das jeweilige Kühlmedium beziehungsweise die jeweilige Kühlflüssigkeit vorgegebene Betriebstemperatur. So wird die Wärmetauscheinheit 28 beispielsweise mittels eines weiteren Kühlmediums kühlwassergekühlt, sodass ein besonders vorteilhaftes Unterkühlen des Kondensats 20 auf beispielsweise 14 °C beziehungsweise Raumtemperatur ermöglicht wird.

FIG 2 zeigt in einer schematischen Perspektivansicht eine Kondensationseinrichtung 16 für eine hier vorgestellte Reaktionsvorrichtung 10 zum Durchführen des hier vorgestellten Verfahrens. Dabei zeigt FIG 2 die Kondensationseinrichtung 16 ohne Gehäuse beziehungsweise Wandung, welche insbesondere einen weiteren Druckbehälter bildet. Die Kondensationseinrichtung 16 umfasst wenigstens drei miteinander ausgebildete Wärmetauscheinheiten 24, 26, 28, von denen die erste Wärmetauscheinheit 24 als Gegenstromkühler, die zweite Wärmetauscheinheit 26 als Kondensor, und die dritte Wärmetauscheinheit 28 als Nachkühler ausgebildet sind.

Die erste Wärmetauscheinheit 24 ist durch mehrere zueinander parallel beabstandet angeordnete massive Platten 42 ausgebildet, wobei jeweils zwei benachbarte Platten 42 jeweils einen Plattenkanal 44 ausbilden, welcher jeweils im Wesentlichen entlang einer Kondensationsrichtung 54 axial orientiert ist und die Plattenkanäle 44 wechselseitig geöffnet sind, sodass über den jeweiligen Plattenkanal 44, welcher sich bis in die zweite Wärmetauscheinheit 26 erstreckt, da die zweite Wärmetauscheinheit 26 so ausgebildet ist, dass die jeweils ersten Platten 42 durch poröse Demistorplatten 46 nahtlos fortgeführt werden, in der zweiten Wärmetauscheinheit ein Phasenabscheiden möglich ist, und durch die wechselseitige Öffnung der Plattenkanäle 44 somit die erste Wärmetauscheinheit 24 als Gegenstromkühler betreibbar ist. Die dritte Wärmetauscheinheit 28 ist schließlich aus sich abwechselnd aneinander liegenden vollen Platten 48 und porösen Sammelplatten 50 ausgebildet, welche im Wesentlichen senkrecht zu den Platten 42 und 46 der ersten und zweiten Wärmetauscheinheit 24 und 26 angeordnet sind. Die dritte Wärmetauscheinheit 28 umfasst wenigstens einen Kühlkanal 52 und den insbesondere in Kondensationsrichtung 54 in einem Endbereich 56 liegenden Sammelkanal 30 für das Kondensat 20.

FIG 3 zeigt in einer schematischen Schnittansicht einen Ausschnitt der Kondensationseinrichtung 16, wobei der Übergang der massiven Platten 42 in die porösen Demistorplatten 46 gezeigt ist, sodass jeweils benachbarte Plattenkanäle 44 einmal zum Einströmen des Speisegases 14 und zum Ausströmen des trockenen Gases 22 dienen. Im unteren Endbereich 56 wird über den Sammelkanal 30 das Kondensat 20 abgeführt, während es durch die dritte Wärmetauscheinheit 28 weiter gekühlt wird. Dabei geht das poröse Material der porösen Demistorplatten 46 in das poröse Material der porösen Sammelplatten 50 über, welche für ein besonders vorteilhaftes Kühlen jeweils von den dazwischenliegenden massiven Kühlplatten - den Platten 48 - umgeben sind.

Ein Werkstoff der Kondensationseinrichtung 16 ist insbesondere gegenüber Hochdruck und/oder hohen Temperaturen und/oder Ammoniak und/oder Wasserstoff und/oder Stickstoff langzeitstabil, sodass die Reaktionsvorrichtung 10 besonders langlebig ausgebildet werden kann. Darüber hinaus umfasst der Werkstoff beispielsweise die Legierung IN625 und/oder IN718, wobei erster eine Wärmeleitfähigkeit von beispielsweise 10 W/(m*K) aufweist, wodurch ein Temperaturgradient, insbesondere entlang der Kondensationsrichtung 54, ausbildbar, sodass insbesondere auch aufgrund der dünnen Wandstärke der Platten 42 und 46 und somit axial beziehungsweise in Kondensationsrichtung 54 ein Gradient der Temperatur ausbildbar ist.

FIG 4 zeigt in einer schematischen Perspektivansicht eine Vorwärmeeinheit 36, welche durch einen ersten Reaktor 34 umgeben von einem Heatpipe-Temperiereinheit gebildet ist. Durch Röhren des ersten Reaktor 34 werden die Edukte beziehungsweise das Speisegas 14 in Richtung beziehungsweise zur Kondensationseinrichtung 16 gefördert und dabei über ein Kühlmedium, welches beispielsweise durch das Wärmeaustauschreservoir 38 beziehungsweise Wärmegewinnungsreservoir 40 dargestellt wird, vorgeheizt. Als Kühlmedium kann bei der Heatpipe-Temperiereinheit beispielsweise Naphthalin eingesetzt werden, was mit beispielsweise 400 °C durch die Heatpipes der Heatpipe-Temperiereinheit geleitet wird und dementsprechend das beispielsweise mit 50 °C eingeleitete Speisegas auf 350 °C bis 400°C für die Kondensationseinrichtung 16 erwärmt.

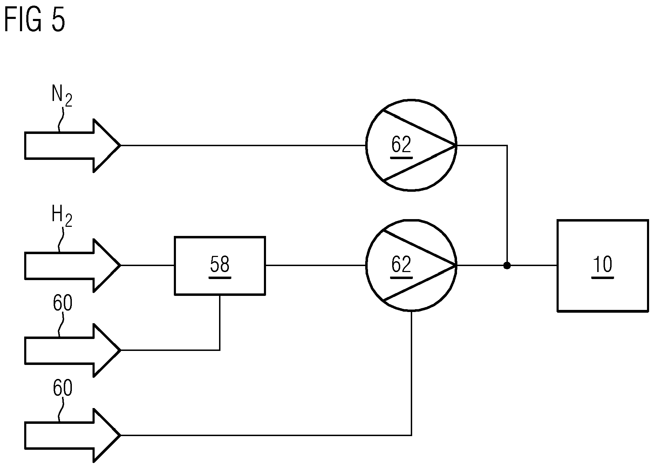

FIG 5 zeigt schematisch ein Ablaufdiagramm für das Verfahren, bei welchem die Ausgangsstoffe bereitgestellt und bis zur Reaktionsvorrichtung 10 geleitet werden. Dabei wird Wasserstoff H₂ über einen Elektrolyseur 58 gewonnen, welcher mit Strom 60 versorgt wird, wobei der Elektrolyseur 58 vorteilhafterweise an das Wärmegewinnungsreservoir 40 gekoppelt ist beziehungsweise zumindest dessen Temperatur aufweist.

Sowohl Stickstoff als auch Wasserstoff werden mittels Verdichtern 62 zur Reaktionsvorrichtung 10 gefördert.

FIG 6 zeigt mehrere gemeinsam ausgebildete Reaktionsvorrichtungen 10 mit jeweils einer Kondensationseinrichtungen 16 und einer Reaktoreinrichtung 12, welche in Reihe geschaltet sind, sodass mehrere Reaktordurchläufe beziehungsweise Durchläufe des Verfahrens in einer Kaskade hintereinander durchgeführt werden können. In der FIG 6 ist durch "[...]" angedeutet, dass hier quasi eine beliebige Anzahl von weiteren Reaktionsvorrichtungen 10 zwischen der ersten und der letzten Reaktionsvorrichtung 10 angeordnet sein können. Beispielweise können fünf Reaktionsvorrichtungen 10 in Reihe geschaltet sein, und aus jeder kann Kondensat 20 ausgeleitet werden, wobei jeweils das aus der vorgelagerten Kondensationseinrichtung 16 ausgeleitete trockene Gas 22 als Speisegas 14 für die nächste Reaktoreinrichtung 12 dient.

Durch die Reaktionsvorrichtung 10 ist somit ein hochintegrierter Reaktor bereitstellbar, welcher beispielsweise mittels additiver Fertigung, insbesondere durch Pulverbettfusion, gefertigt werden kann. Durch die additive Fertigung ergeben sich insbesondere für die Kondensationseinrichtung 16 eine besonders hohe Strukturfestigkeit und eine günstige Geometrie für Wärmeleitfähigkeit beziehungsweise eine Wärmeintegration.

Die Reaktionsvorrichtung 10 ermöglicht eine vorteilhafte Komplexitätsbündelung für die Ammoniaksynthese insbesondere durch Kaskadierung von mehreren Reaktoreinrichtung 12 und Kondensationseinrichtungen 16, sowie durch die Möglichkeit eines gemeinsamen Wärmetausches, beispielsweise über die Wärmesenke 18, das Wärmeaustauschreservoirs 38 sowie das Wärmegewinnungsreservoirs 40, wodurch eine Produktkondensation des Kondensats 20 besonders vorteilhaft insbesondere mehrstufig ermöglicht wird.

Durch die Verwendung von langzeitstabilen Legierungen wie IN625 und/oder IN718 können besonders anspruchsvolle Formen durch die additive Fertigung ermöglicht werden. Dabei sind die Festigkeitswerte der Legierungen für beispielsweise besonders dünne Wandstärken von 1 mm oder weniger bei entsprechender Hinterstützung, mittels beispielsweise einer Stützstruktur, geeignet, wodurch hohe Druckdifferenzen beispielsweise für den Druckbehälter realisierbar sind.

Insbesondere ist durch das Zusammenspiel von der Reaktoreinrichtung 12, welche die Vorwärmeeinheit 36 umfasst und monolithisch mit den drei Wärmetauscheinheiten 24, 26 und 28 gebildet ist, und eben diesen ermöglicht, dass beispielsweise durch die Reaktoreinrichtung 12mehrere Reaktionsbereiche oder -zonen, beziehungsweise der erste Reaktor 34 und der zweite Reaktor 35, gebildet werden. Diese können bei verschiedenen Temperaturen, beispielsweise 400°C und 350 °C, arbeiten beziehungsweise betrieben werden. Die beiden Reaktionszonen beziehungsweise Reaktoren 34 und 35 ermöglichen es zum einen hohe Umsätze zu haben (Temperatur höher, schneller Umsatz) und dennoch das chemische Gleichgewicht zu begünstigen (Temperatur niedriger, Restmengen-Umsatz bis ins Gleichgewicht).

Hochtemperaturwärme wird beispielsweise an das Nutzwärmesystem über die Heatpipes der Heatpipe-Temperiereinheit abgegeben, das zum Vorheizen des Feedgases beziehungsweise des Speisegases 14 benutzt wird. Dabei kann exergetisch günstig sein, zunächst das geringere Temperaturniveau von z.B. 350 °C der zweiten Reaktionszone zu nutzen und mit Reaktionswärme weiter aufzuheizen, und aus der ersten Reaktionszone bei höherer Temperatur auszukoppeln als Nutzwärme.

Ein Wärmetauscher ist insbesondere über die erste Wärmetauscheinheit 24 zur Vermeidung von Wärmeverlusten ermöglicht. Kondensation in der zweiten Wärmetauscheinheit 26 und Unterkühlung des unter Druck stehenden Kondensats 20 in der dritten Wärmetauscheinheit 28 bis auf Raumtemperatur ermöglicht.

Die Legierung IN625 leitet mit einer Wärmeleitfähigkeit von nur 11 W/(m*K) Wärme für einen metallischen Werkstoff besonders wenig. Lange Bauteile mit dünner Wandstärke in Richtung des Temperaturgradienten verlieren daher axial sehr wenig Wärme und sind in der Lage, einen Temperaturgradienten aufzubauen. Dünne Platten, beispielsweise die Platten 42 und 46, tauschen trotz der schlechten Wärmeleitfähigkeit radial immer noch ausreichend viel Wärme aus.

Um insgesamt den gewünschten Druck von 50 MPa beziehungsweise 500 bar zu erreichen, wird ein Verdichter mit ionischer Flüssigkeit verwendet, welcher beispielsweise auch kleine Mengen von zum Beispiel 18 kg Wasserstoff pro Stunde auf Druck von 500 bar erreichen kann und dies beispielsweise in kompakten Einheiten von 10 t im Container. Zumindest eine der Verdichter 62 kann als ionische Verdichter ausgebildet sein.

Das Reaktorsystem beziehungsweise der erste Reaktor 34 im Wärmebad des Heatpipekühlers kann beispielsweise besonders effizient aufgrund der additiven Fertigung betrieben werden, da beispielsweise funktionale Elemente gleichzeitig ohne Mehraufwand gefertigt werden können.

Durch die in FIG 6 gezeigte Kaskadierung können das Ammoniakprodukt beziehungsweise das Kondensat 20 jeweils in der jeweiligen Kondensationseinrichtung 16 auskondensiert werden, wobei nur der nicht verzichtbare Wärmeverlust über die axiale Wärmeleitung beziehungsweise entlang der Kondensationsrichtung 54 in der jeweiligen Kondensationseinrichtung 16 und die bei der Kondensation und Unterkühlung freiwerdende Wärme ins Kühlwasser abfließen. Die Wärme im heißen Produktstrom, also aus dem jeweils Speisegas 14, wird zum Aufheizen des aus dem Kondensator kommenden Restgases benutzt. Nutzwärme wird insbesondere bei 400 °C ausgekoppelt.

Durch das hier vorgestellte Verfahren und die vorgestellte Reaktionsvorrichtung 10 ergeben sich mehrere Vorteile. So bietet das gezeigte Verfahren im Vergleich zu konventionellen Ammoniaksynthese einige Vorteile, die insbesondere im Kontext dezentraler erneuerbarer Energien zum Tragen kommen.

Zum ersten gibt es prozesstechnische Vorteile, so kann sich das chemische Gleichgewicht beim Betrieb bei sehr hohem Druck in einen attraktiven Bereich verschieben. Bei 500 bar können selbst bei 400 °C Umsätze von beispielsweise 60 % erreicht werden, wobei eine hohe Reaktionsgeschwindigkeit und wenig Katalysator verwendet zu werden braucht. Üblich sind in großindustriellen Anlagen 200 °C und 330 °C mit einer sehr viel niedrigeren Reaktionsrate.

Darüber hinaus ist eine Zwischenkondensation realisierbar, welche eine sehr hohe Ausbeute ermöglicht, da Ammoniak dem Gleichgewicht entzogen werden kann. Ferner kann durch die Kaskadierung beziehungsweise Wiederholung beispielsweise eine Gesamtausbeute an Ammoniak bei 400 °C, 500 bar und beispielsweise fünf Durchläufen bei bis zu 99 % liegen.

Darüber hinaus sorgt die Isothermie der Reaktionsvorrichtung 10 für eine Steuerbarkeit und exakt vorhersagbares Verhalten (ohne hot spots / cold spots). Die Isothermie des Reaktors ermöglicht ferner eine präzise Betriebsführung für den Katalysator ohne Schädigung. Darüber hinaus kann die Reaktionsvorrichtung 10 besonders kompakt gebaut werden, wobei ein Anwärmen und Abkühlen mit besonders wenig Energieaufwand beziehungsweise ein Warmhalten auch ohne Betrieb bei nur geringem thermischem Verlust ermöglicht werden. Die Reaktionsvorrichtung 10 ist monolithisch auch insbesondere als Hochleistungslegierung gefertigt und damit als Materialsystem auch bei hohen Temperaturen sehr resistent und zäh und darüber hinaus sehr korrosionsfest, wobei trotzdem kleine Strukturen präzise ausgebildet werden können. Die Isothermie des Verfahrens und somit in der Reaktionsvorrichtung 10 kann durch Salzschmelze oder den Heatpipe-Temperiereinheit beispielsweise mit Naphthalin als Arbeitsmedium, welches bis ca. 450 °C betreibbar ist, ermöglicht werden.

Aktuelle Anlagen mit additiver Fertigung ermöglichen beispielsweise ein Bauraumvolumen von 0,6 m³, wodurch beispielsweise eine Reaktionsvorrichtung 10 so designt werden kann, dass 216 Liter adressierbar sind, wovon 25 bis 50 Liter als Katalysatorschüttung realisierbar sein können.

Weitere Vorteile sind eine Wärmeeffizienz, sodass nur geringe Wärmemengen in ein kaltes Kühlwasser abgegeben, wo sie für die Nutzung verloren sind. Wärme wird im System beziehungsweise der Reaktionsvorrichtung 10 nach exergetischen Gesichtspunkten nur mit dem erforderlichen Temperaturniveau eingesetzt. Hochtemperaturwärme wird ausgekoppelt und kann genutzt werden. Mehr als 95 % Ausbeute ohne Kreisgasverdichter sind dadurch möglich, wobei nur eine Kompression eines kalten Gases erfolgt. Exergetische Effizienz ergibt beispielsweise ein robustes Eco-Design.

Mechanisch und in der Montage ist das Verfahren ebenfalls einfach durchsetzbar beziehungsweise die Reaktionsvorrichtung 10 zu betreiben, da beispielsweise wenig Verbindungsleitungen vorgesehen sind, keine Dichtungen und damit keine Leckagerisiken beim Übergang zwischen einzelnen Wärmetauscheinheiten 24, 26, 28 und der Vorwärmeeinheit 36 ermöglicht werden. Ferne kann durch die additive Fertigung auch eine Hochleistungslegierung wie IN625 in der geforderten Fragilität bearbeiten werden, sodass auch eine besonders kompakte Bauform ermöglicht wird, und gegenüber konventionellen Anlagen, bei denen Reaktoren beispielsweise einen Durchmesser von 4 m aufweisen können, ein Hochdruck von 500 bar bei 500 °C realisiert werden.

Darüber hinaus spielt die Nachhaltigkeit heutzutage eine immer größere Rolle, wobei durch die Kondensationseinrichtung 16 ein multifunktionales Monomaterial (Multifunctionmonomaterial) realisiert werden kann, sodass die Reaktionsvorrichtung 10 besonders einfach recycelt werden kann, so kann beispielsweise ein geschlossener Stoffwechselkreislauf für den Reaktorkörperrückbau, welcher insbesondere bei hochwertigen Legierungen besonders wünschenswert ist, problemlos ermöglicht werden. Darüber hinaus ist ein ionischer Verdichter besonders effizient, und eine Wärmenutzung ist dezentral ermöglicht.

Dezentral in der Fläche anfallende erneuerbare Energie kann durch das vorgestellte Verfahren und die Reaktionsvorrichtung 10 besonders vorteilhaft genutzt werden, sodass beispielsweise eine dezentrale Herstellung von Düngemittel ohne CO₂-Freisetzung ermöglicht wird.

### Bezugszeichenliste

- 10: Reaktionsvorrichtung
- 12: Reaktoreinrichtung
- 14: Speisegas
- 16: Kondensationseinrichtung
- 18: Wärmesenke
- 19: nasses Gas
- 20: Kondensat
- 22: trockenes Gas
- 24: erste Wärmetauscheinheit
- 26: zweite Wärmetauscheinheit
- 28: dritte Wärmetauscheinheit
- 30: Sammelkanal
- 32: Reaktionsraum
- 34: erster Reaktor
- 35: zweiter Reaktor
- 36: Vorwärmeeinheit
- 38: -Wärmeaustauschreservoir
- 40: -Wärmegewinnungsreservoir
- 42: massive Platten
- 44: Plattenkanal
- 46: poröse Demistorplatte
- 48: volle Platte
- 50: poröse Sammelplatte
- 52: Kühlkanal
- 54: Kondensationsrichtung
- 56: Endbereich
- 58: Elektrolyseur
- 60: Strom
- 62: Verdichter
- 64: Phasenscheider
- 66: Katalysator

## Patentansprüche

1. Verfahren zur Ammoniaksynthese mit einer Reaktionsvorrichtung (10) in deren Reaktoreinrichtung (12) Speisegas (14), welches zumindest Stickstoff und Wasserstoff als Edukte umfasst, über eine Einlassöffnung unter Druck über einen Katalysator (60) geleitet wird, wobei Ammoniak als Produkt gebildet wird und dieses als nasses Gas (19) hin zu einer Kondensationseinrichtung (16), die zumindest drei monolithisch miteinander ausgebildete Wärmetauscheinheiten (24, 26, 28) aufweist, geleitet wird, um diese zu durchströmen, wobei das Ammoniak als Kondensat (20) kondensiert wird, wobei die erste Wärmetauscheinheit (24) als Gegenstromkühler betrieben wird und dadurch das nasse Gas (19) mit trockenem Gas (22), aus welchem bereits Ammoniak kondensiert ist, Wärme tauscht, und die zweite Wärmetauscheinheit (26) als Kondensor betrieben wird, wodurch die gasförmigen Edukte vom flüssigen unter Druck stehendem Kondensat (20) getrennt werden, und die dritte Wärmetauscheinheit (28) als Nachkühler betrieben wird und dadurch das unter Druck stehende Kondensat (20) unterkühlt und über einen Sammelkanal (30) abgeleitet wird und das trockene Gas (22) über eine Auslassöffnung abgeführt wird.

2. Verfahren nach Anspruch 1, **dadurch gekennzeichnet, dass** die Reaktoreinrichtung (12) einen, insbesondere monolithisch mit der Kondensationseinrichtung (16) ausgebildeten, Reaktionsraum (32) aufweist, welcher durch eine Vorwärmeeinheit (36) und einen zweiten Reaktor (35) umgeben von einem Heatpipe-Wärmeaustauschreservoir (38) sowie durch einen ersten Reaktor (34) umgeben von einem Heatpipe-Wärmegewinnungsreservoir (40) ausgebildet ist und durch welche das Speisegas (14) vorgewärmt und zur Reaktion gebracht wird.

3. Verfahren nach Anspruch 1 oder 2, **dadurch gekennzeichnet, dass** der Reaktionsraum (32) durch einen Druckbehälter gebildet, und das Speisegas (14) mit wenigstens 300 und insbesondere 400 bar und besonders bevorzugt 500 bar in den Reaktionsraum (32) eingeleitet wird.

4. Verfahren nach einem der vorhergehenden Ansprüche, **dadurch gekennzeichnet, dass** der Druck des Speisegases (14) mittels eines ionischen Verdichters (62) erzeugt wird.

5. Verfahren nach einem der vorhergehenden Ansprüche, **dadurch gekennzeichnet, dass** mehrere Reaktordurchläufe in einer Kaskade hintereinander durchgeführt werden, und dazu insbesondere eine korrespondierende Anzahl an Reaktionsvorrichtungen (10), insbesondere monolithisch gefertigt, in Reihe geschaltet sind.

6. Reaktionsvorrichtung (10) für ein Verfahren nach einem der vorhergehenden Ansprüche mit einer Reaktoreinrichtung (12) und einer Kondensatoreinrichtung (16), welche wenigstens drei monolithisch miteinander ausgebildete Wärmetauscheinheiten (24, 26, 28) aufweist, von denen die erste Wärmetauscheinheit (24) als Gegenstromkühler, die zweite Wärmetauscheinheit (26) als Kondensor, und die dritte Wärmetauscheinheit (28) als Nachkühler ausgebildet sind.

7. Reaktionsvorrichtung (10) nach Anspruch 6, **dadurch gekennzeichnet, dass** die erste Wärmetauscheinheit (24) durch mehrere zu einander parallel beabstandet angeordnete massive Platten (42) ausgebildet ist, und jeweils zwei benachbarte Platten (42) jeweils einen Plattenkanal (44) ausbilden, und die zweite Wärmetauscheinheit (26), durch poröse Demistorplatten (46) ausgebildet ist, welche jeweils die Platten (42) der ersten Wärmetauscheinheit (24) nahtlos fortführen, und die dritte Wärmetauscheinheit (28) aus sich abwechselnden aneinanderlegen vollen Platten (48) und porösen Sammelplatten (50) ausgebildet ist, welche im Wesentlichen senkrecht zu den Platten (42, 46) der ersten und zweiten Wärmetauscheinheit (24, 26) angeordnet sind und wenigstens einen Kühlkanal (52) und in einem in eine Kondensationsrichtung (54) liegenden Endbereich (56) einen Sammelkanal (30) aufweisen.

8. Reaktionsvorrichtung (10) nach Anspruch 6 oder 7, **dadurch gekennzeichnet, dass** die Reaktionsvorrichtung (10) mehrere Reaktoreinrichtungen (12) und Kondensationseinrichtungen (16) umfasst und/oder die Reaktoreinrichtung (12) und die Kondensationseinrichtung (16) einzeln und/oder zusammen insbesondere einstückig und/oder additiv gefertigt ist beziehungsweise sind.

9. Reaktionsvorrichtung(10) nach einem der Ansprüche 6 bis 8, **dadurch gekennzeichnet, dass** ein Werkstoff der Reaktoreinrichtung (12) und/oder der Kondensationseinrichtungen (16) gegenüber Hochdruck und/oder hohe Temperatur und/oder Ammoniak und/oder Wasserstoff und/oder Stickstoff langzeitstabil ist.

10. Reaktionsvorrichtung(10) nach einem der Ansprüche 6 bis 9, **dadurch gekennzeichnet, dass** der Werkstoff NiCr22Mo9Nb und/oder NiCr19Fe19Nb5Mo3 umfasst und/oder eine Wärmeleitfähigkeit von weniger als 15 und insbesondere 11 W/(m*K) aufweist, wodurch ein Temperaturgradient, insbesondere entlang der Kondensationsrichtung (54), ausbildbar.
